# EUROPEAN PATENT SPECIFICATION

(11) **EP 1 431 620 B1**
(45) Date of publication and mention of the grant of the patent: **23.02.2011**
(21) Application number: 03258083.9
(22) Date of filing: 19.12.2003
(51) Int. Cl.: F16H 59/04

(54) **Manual gearshift lever apparatus**
Schalthebelvorrichtung für manuelle Schaltgetriebe
Dispositif de levier de vitesses pour boîte de vitesses manuelle

(30) Priority: 19.12.2002 JP 2002368312
(43) Date of publication of application: 23.06.2004
(73) Proprietor: Honda Motor Co., Ltd., Minato-ku Tokyo (JP)
(72) Inventor: Mandou, Kiyohiro, Wako-shi Saitama (JP)
(74) Representative: Piésold, Alexander James

(56) References cited:
- EP-A1- 0 565 400
- DE-A1- 4 227 413
- FR-A1- 2 725 160
- JP-A- 2001 165 311

## Description

The present invention relates to a gearshift lever apparatus for a manual transmission.

As a manual transmission gearshift lever technology, there is proposed a technology such as one described in, for example, JP-A-2001-165311 in which a gearshift lever is supported so as to freely rock on a spherical body provided at a lower end portion of the lever, and rods are connected to an intermediate position of the gearshift lever which rods are pushed and pulled when the gearshift lever is operated to change speeds.

In addition, JP-A-2001-165311 also describes a gearshift lever apparatus in which two cables are pushed and pulled to change speeds.

In the aforesaid gearshift lever apparatus in which transfer members such as the two cables are pushed and pulled to control speed changes, there is usually adopted a link mechanism for pushing and pulling the two transfer members through operation of the gearshift lever. However, usage of such a link mechanism increases the number of operating portions which are required to transfer an operating force to the transfer members. As a result, looseness at each operating portion is accumulated, and the total looseness resulting when the gearshift lever is operated becomes large, resulting in aproblem that the looseness unfavorably deteriorates the gearshift lever control feeling. In addition, there is caused another problem that the number of components involved is increased.

Consequently, an object of the invention is to provide a gearshift lever apparatus which can reduce the looseness by enabling push-pull movement of the two transfer members without using the link mechanism and which can, as a result, not only improve the operation feeling of the gearshift lever but also reduce the number of components involved.

With a view to attaining the object, according to a first aspect of the invention, there is provided a manual transmission gearshift lever apparatus in which gear changes are controlled by pushing and pulling two transfer members, comprising a first operating shaft (for example, a support bolt 32 in an embodiment), a second operating shaft (for example, a support shaft 24 in the embodiment) provided rotatably about an axis (for example, a center axis O1 in the embodiment) of the first operating shaft while beingmade perpendicular to the axis of the first operating shaft and a lever (for example, a lever 35 in the embodiment) provided rotatably about an axis (for example, a center axis O2) of the second operating shaft, wherein a connecting portion (for example, a connecting portion 27 in the embodiment) for connecting one of the transfer members (for example, a shift cable 12 in the embodiment) onto the axis of the second operating shaft is disposed with its position being fixed relative to the second operating shaft, and a second connecting portion (for example, a connecting portion 44 in the embodiment) for connecting the other transfer member (for example, a selection cable 11 in the embodiment) is disposed with its position being fixed relative to the lever. Such an arrangement is shown in EP 0565400 A1 which shows all the features of the preamble of claim 1. The invention is characterized in that the second connecting portion is provided on a plane which intersects at right angles with the axis of the second operating shaft and includes the axis of the first operating shaft.

According to the construction, when the lever and the second operating shaft are rocked about the axis of the first operating shaft, the connecting portion provided on the axis of the second operating shaft with its position being fixed relative to the second operating shaft swivels about the axis of the first operating shaft. Thus, one of the transfer members which is connected to the connecting portion can be pushed and pulled. In addition, when the lever is rocked about the axis of the second operating shaft, the second connecting portion provided on the plane which intersects at right angles with the axis of the second operating shaft and includes the axis of the first operating shaft with its position being fixed relative to the lever swivels about the axis of the second operating shaft.
Thus, the other transfer member which is connected to the connecting portion can be pushed and pulled. Consequently, the two transfer members can be pushed and pulled without using any link mechanism.

According to a second aspect of the invention, there is provided a manual transmission gearshift lever apparatus as set.forth in the first aspect of the invention, wherein the first operating shaft extends transversely, and the second operating shaft extends forward from the first operating shaft, whereby the lever is allowed to rock longitudinally about the axis of the first operating shaft and transversely about the axis of the second operating shaft.

According to the construction, when the lever and the second operating shaft are rocked longitudinally about the axis of the first operating shaft, the connecting portion provided on the axis of the second operating shaft with its position being fixed relative to the second operating shaft swivels about the axis of the first operating shaft. Thus, one of the transfer members which is connected to the connecting portion can be pushed and pulled. In addition, when the lever is rocked transversely about the axis of the second operating shaft, the connecting portion provided on the plane which intersects at right angles with the axis of the second operating shaft and includes the axis of the first operating shaft with its position being fixed relative to the lever swivels about the axis of the second operating shaft. Thus, the other transfer member which is connected to the connecting portion can be pushed and pulled.

According to a third aspect of the invention, there is provided a manual transmission gearshift lever apparatus as set forth in the first or second aspect of the invention, wherein the two transfer members are made to extend in perpendicular direction relative to an operational plane which includes the axis of the first operating shaft and the axis of the second operating shaft which result when the lever is situated in a predetermined neutral selection position which constitutes an intermediate position of a rocking range around the axis of the first operating shaft and an intermediate position of a rocking range around the axis of the second operating shaft.

When the lever and the second operating shaft are rocked about the axis of the first operating shaft from a condition where the lever is in a neutral selection position, the connecting portion provided on the axis of the second operating shaft with its position being fixed relative to the second operating shaft swivels about the axis of the first operating shaft, the connecting portion moves substantially perpendicularly relative to the operational plane which includes the axis of the first operating shaft and the axis of the second operating shaft which result when the lever is in the neutral selection position. In addition, when the lever is rocked about the axis of the second operating shaft from the condition where the lever is in the neutral selection position, the connecting portion provided on the plane which intersects at right angles with the axis of the second operating shaft and includes the axis of the first operating shaft with its position being fixed relative to the lever swivels about the axis of the second operating shaft, and in case the connecting portion is disposed close to the operational plane in the neutral selection position, the connecting portion moves substantially perpendicularly relative to the operational plane. As a result; the two transfer members which extend in the perpendicular direction can be pushed and pulled with good efficiency.

Preferred embodiments of the invention will now be described, by way of example only, with reference to the accompanying drawings in which:
Fig. 1 is a perspective view showing a condition where a selection cable and a shift cable are connected to a gearshift lever apparatus according to an embodiment of the invention;
Fig. 2 is a perspective view showing the gearshift lever apparatus according to the embodiment of the invention;
Fig. 3 is an exploded perspective view showing the gearshift lever apparatus according to the embodiment of the invention;
Fig. 4 is a front view showing the gearshift lever apparatus according to the embodiment of the invention;
Fig. 5 is a side view, as viewed from one side, showing the gearshift lever apparatus according to the embodiment of the invention;
Fig. 6 is a side view, as viewed from an opposite side, showing the gearshift lever apparatus according to the embodiment of the invention;
Fig. 7 is a sectional view taken along the line A-A in Fig. 6 which shows the gearshift lever apparatus according to the embodiment of the invention;
Fig. 8 is a diagram showing a typical lever locus of the gearshift lever apparatus according to the embodiment of the invention; and
Figs. 9A to 9D are diagrams showing typical modified lever loci of the gearshift lever apparatus according to the embodiment of the invention.

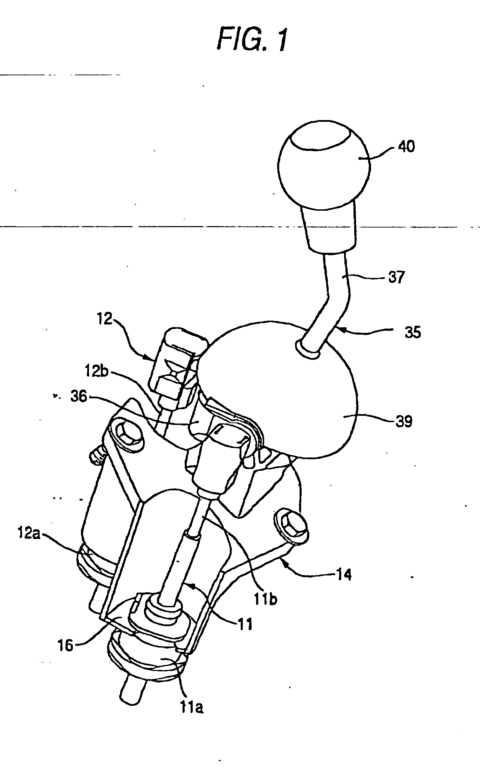

A gearshift lever apparatus according to an embodiment of the invention is a gearshift lever apparatus for a manual transmission which is disposed on an instrument panel or a center console of a vehicle for pushing and pulling two cables, which are a selection cable (a transfer member) 11 and a shift cable (a transfer member) 12, through operation of a gearshift lever, as shown in Fig. 1, to control speed changes of the manual transmission. Note that when used in the following description, forward or front, rearward or rear, leftward or left and rightward or right denote forward or front, rearward or rear, leftward or left and rightward or right directions, respectively, relative to a traveling direction of a vehicle when it travels forward.

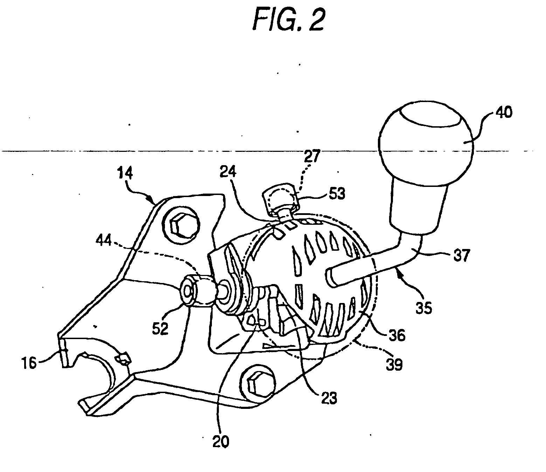

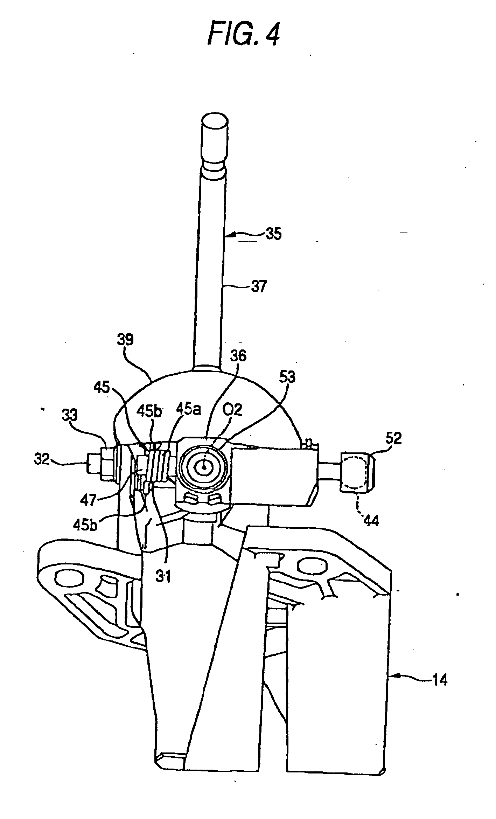

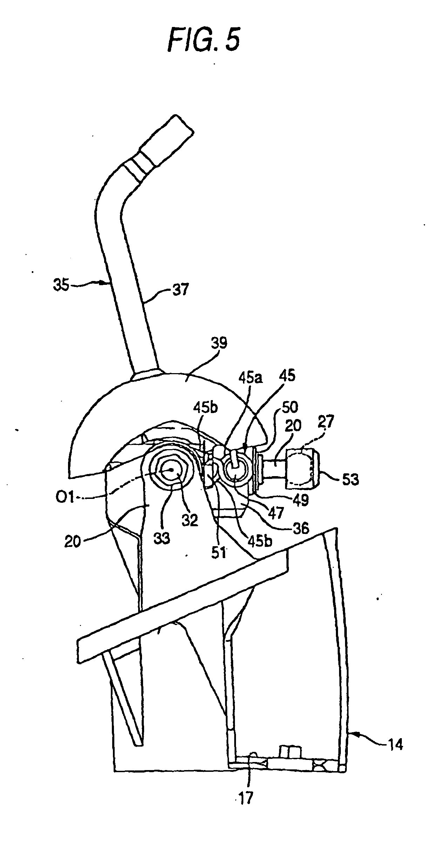

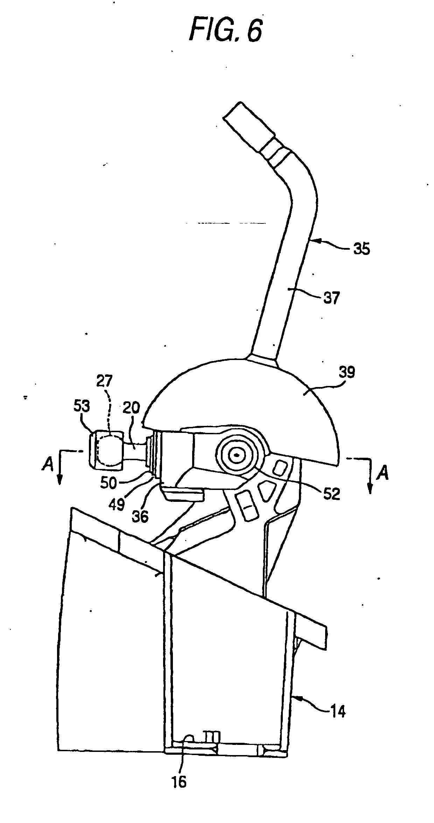

As shown in Figs. 2 to 6, the gearshift lever apparatus has a base bracket 14. This base bracket is such as to be fixed to a vehicle body side with an upper portion thereof inclining slightly downwardly as it extends rearward. As shown in Figs. 1 to 3 and Fig. 6, an outer cable attaching portion 16 for holding an outer cable portion 11a of the selection cable 11 is formed on a left-hand side of a lower portion of the base bracket 14, and, as shown in Fig. 5, an outer cable attaching portion 17 for holding an outer cable portion 12a of the shift cable 12 is formed on a front side of the base bracket 14.

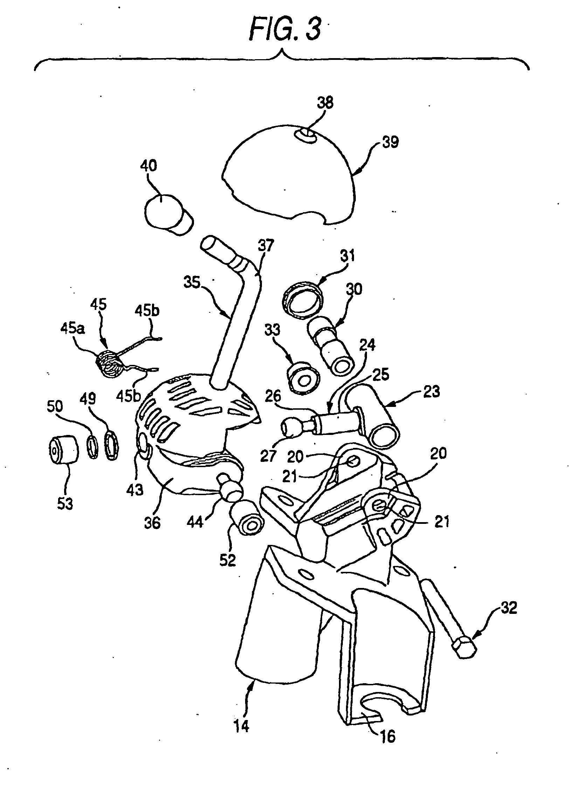

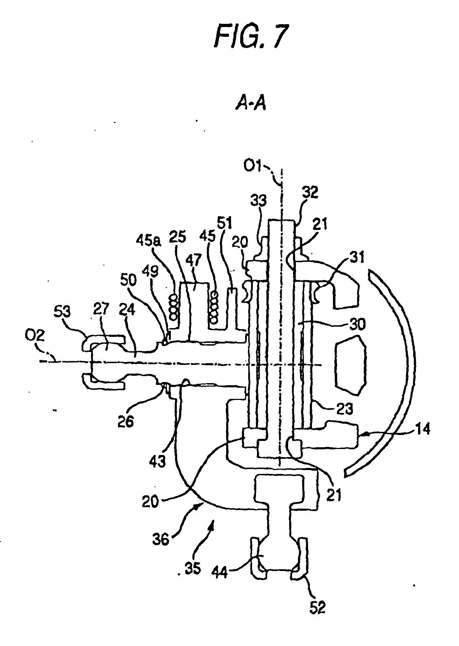

As shown in Figs. 3 and 7, a pair of shaft supporting portions 20 which are transversely spaced away is provided at an upper portion of the base bracket 14, and a through hole 21 is opened in each of the shaft supporting portions 21 transverselyhorizontallyso as to align with each other axially.

A substantially cylindrical boss member 23 is rotatably connected to the shaft supporting portions 20 on both sides of the base bracket 14. A support shaft (a second operating shaft) 24 is connected to the boss member 23, which support shaft 24 extends from an axially intermediate position of the boss member 23 in a perpendicular direction relative to a center axis of the boss member 23.

A support portion 25 having a cylindrical surface is formed on the support shaft 24, and an annular locking groove 26 is formed in the support shaft 24 at a position distal to the support portion 25. Furthermore, a connecting portion 27 is formed at a distal end and on a center axis of the support shaft 24, and this connecting portion 27 has a spherical surface a center of which is disposed on the center axis of the support shaft 24. Here, the support shaft 24 and the boss member 23 are formed into a single component by welding or integral molding.

A cylindrical collar 30 is rotatably fitted in an inside diameter side of the boss member 23 in a coaxial fashion, and a pulley-like spring guide 31 is rotatably supported at an axial end on an outside diameter side of the boss member 23 in a coaxial fashion.

Then, with the boss member 23 on which the spring guide 31 and the collar 30 are provided being provided between the pair of shaft support portions 20, a support bolt (a first operating shaft) 32 is passed through the through hole 21 in one of the shaft support portions 20, the inside diameter side of the collar 30 and the through hole 21 in the other shaft support portion 20, and a nut member 33 is screwed on a portion of the support bolt 32 which protrudes from the other shaft support portion 20, whereby the collar 30, spring guide 31, boss member 23, support shaft 24, support bolt 32 and nut member 33 are connected to the shaft support portions 20 while being restricted with respect to axial movements.

In an assembled condition like this, center axes of the through holes 21, support bolt 32, collar 30, boss member 23 and spring guide 31 are allowed to align with one another, as shown in Fig. 7. Namely, the boss member 23 and the support shaft 24 which are made integral are supported on the support bolt 32 in such a manner as to rotate around this center axis O1, and a center axis O2 of the support shaft 24 is disposed in such a manner as to become perpendicular relative to the center axis O1.

The support shaft 24 is provided on the base bracket 14 in such a manner as to extend forward from the boss member 23, and a lever 35 is rotatably supported on this support shaft 24 in a coaxial fashion.

As shown in Fig. 3, the lever 35 has a lever bracket 36 supported on the support shaft 24, a bent rod-like lever main body 37 fixed at one end thereof and made to extend upwardly from an upper part of the lever bracket 36, a cover 39 having formed therein an insertion hole 38 into which the lever main body 37 is inserted to thereby cover the lever bracket 36 and a control knob 40 fixed to an opposite end portion of the lever main body 37 to the lever bracket 36.

A through hole 43 in which the support portion 25 of the support shaft 24 is rotatably fitted in a coaxial fashion is formed in a front side of the lever bracket 36, and a connecting portion 44 having a spherical surface the center of which is disposed on an axis which intersects at right angles with a center axis of the through hole 43 is formed so as to protrude from a left-hand side of the lever bracket 36 with its position relative to the lever bracket 36 being fixed. In addition, as shown in Figs. 5 and 7, a spring holding portion 47 and a locking portion 51 are formed on a right-hand side of the lever bracket 36, the spring holding portion 47 holding a spring 45 by being inserted into the inside of a coil portion 45a of the spring 45 and the locking portion 51 locking a pair of arm portions 45b which extends from the coil portion 45 by being held therebetween.

The support shaft 24 is inserted into the through hole 43 in the lever bracket 36 until the support portion 25 comes to be fitted in the through hole 43, and a washer 49 is fitted on a portion of the support shaft 24 which protrudes from the lever bracket 36, whereafter a retaining ring 51 if fitted in the locking groove 26, whereby the lever 35 is rotatably supported in the through hole 43 coaxially with the support portion 25 or the support shaft 24. Namely, in the assembled condition like this, the lever 35 is allowed to rotate about the center axis 02 of the support shaft 24.

Here, the spring 45 which is held by the spring holding portion 47 of the lever 35 holds the locking portion 51 on the lever bracket 36 and the spring guide 31 by the pair of arm portions 45b which extend in the same direction from the coil portion 45a from both sides in a radial direction. In this condition, the spring 45 biases the lever 35 in such a manner that the lever 35 is held at a predetermined position around the axis of the support shaft 24. Namely, when the lever 35 is rocked from the predetermined position relative to the support shaft 24, the spring 45 which is restricted from rotating relative to the lever 35 by the locking portion 51 held by the spring holding portion 47 rocks together with the lever 35, and one of the arm portions 45b locked by the spring guide 31 which does not move is displaced in a direction in which it opens to thereby generated a biasing force.

In the assembled condition like this, the connecting portion 44 provided on the lever 35 is always allowed to be provided on a plane which intersects at right angles with the center axis O2 of the support shaft 24 and includes the center axis O1 of the support bolt 32, and to be specific, the center of the spherical surface of the connecting portion 44 is disposed on the center axis O1 of the support bolt 32.

In the construction that has been described heretofore, when the lever 35 is rocked transversely against the biasing force of the spring 45, the lever 35 rocks transversely about the center axis O2 of the support shaft 24, and this center axis O2 constitutes a transverse operation axis which constitutes, in turn, a center about which the lever 35 is rocked transversely. Note that the center axis O2 is always disposed. at a position which is constant relative to the lever 35.

In addition, when the lever 35 is rocked longitudinally, the boss member 23 and the support shaft 24 rock vertically about the center axis O1 of the support bolt 32, and this center axis O1 constitutes a longitudinal operation axis which constitutes, in turn, a center about which the lever 35 is rocked longitudinally.

A connecting member 52 is held to the spherical connecting portion 44 situated on the left-hand side of the lever 35 in such a manner that the connecting member 52 is allowed to rotate in every direction about the center of the spherical surface of the connecting portion 44. In addition, a connecting member 53 is held to the spherical connecting portion 27 situated at the distal end of the support shaft 24 in such a manner that the connecting member 53 is allowed to rotate in every direction about the center of the spherical surface of the connecting portion 27.

Then, an inner cable portion 11b of the selection cable 11 shown in Fig. 1 is connected to the connecting member 52 connected to the connecting portion 44 situated on the left-hand side of the lever 35, and the outer cable portion 11a of the selection cable 11 is connected to the outer cable attaching portion 16 which is situated below the connecting member 52, whereby the selection cable 11 is connected to the connecting portion 44 in such a manner as to rotate about the center of the spherical surface of the connecting portion 44 which is disposed on the plane which intersects at right angles with the center axis O2 of the support shaft 24 and includes the center axis O1 of the support bolt 32. Here, with the support bolt 32 being positioned at a middle or, to be specific, a center of the transverse rocking range of the lever 35, the center of the spherical surface of the connecting portion 44, i.e., a rotational center (a connecting center) of the selection cable 11 at the connecting portion 44 is disposed on the center axis O1 of the support bolt 32. The spring 45 biases the lever 35 such that this position constitutes the aforesaid predetermined position.

In addition, an inner cable portion 12b of the shift cable 12 is connected to the connecting member 53 connected to the support shaft 24 which protrudes forward of the lever 35, and the outer cable portion 12a of the shift cable 12 is connected to the outer cable attaching portion 17 situated below the connecting member 53, whereby the shift cable 12 is connected to the connecting portion 27 in such a manner as to rotate about the center of the spherical surface of the connecting portion 27 disposed on the center axis O2 of the support shaft 24. Namely, a rotational center (a connecting center) of the shift cable 12 at the connecting member 27 is disposed on the center axis O2 of the support shaft 24.

Here, a positional relationship between the connecting portion 44 and the outer cable attaching portion 16 to both of which the selection cable is connected is set such that the selection cable 11 extends vertically relative to an operation plane which includes the center axis O1 and the center axis O2 which result when the lever 35 is in a neutral selection position which is situated at the middle or, to be specific, the center of the longitudinal rocking range and the middle or, to be specific, the center of the transverse rocking range and which constitutes a neutral position of the manual transmission. As this occurs, an angle formed by lines connecting the selection cable 11 with the connecting portion 44 and the center axis O2 becomes 90°.

Additionally, a positional relationship between the connecting member 53 and the outer cable attaching portion 17 to both of which the shift cable 12 is connected is set such that the shift cable 12 extends vertically relative to the operational plane which includes the center axis O1 and the center axis O2 which result when the lever 35 is situated in the neutral selection position.

The operation of the gearshift lever apparatus according to the embodiment that has been described heretofore will be described below.

The gearshift lever apparatus is such as to shift gears of the manual transmission by operating the lever 35 in, for example, a so-called H pattern according to a guide, not shown. Firstly, when the lever 35 is situated in the neutral selection position which resides at the center of the longitudinal rocking range and the center of the transverse rocking range, the manual transmission is always in the neutral position where the driving force of the engine is not transferred to drive wheels of a vehicle. Note that the spring 45 biases the lever 35 so that the lever 35 is situated in the neutral selection position around the axis of the support shaft 24 or in the transverse direction.

When the lever 35 is rocked leftward from the neutral selection position by holding the control knob 40, the lever 35 rocks leftward around the center axis O2 of the support shaft 24 so as to take a leftward rocked condition where the connecting portion 44 which is provided on the lever 35 in such a manner as to be situated sideways relative to the center axis O2 moves downwardly to thereby push the inner cable portion 11a of the selection cable 11 downwardly. Note that, as this occurs, since the connecting portion 27 provided on the center axis 02 of the support shaft 24 does not move, the inner cable portion 12b of the shift cable 12 is neither pushed nor pulled.

In this leftward rocked condition, when the lever 35 is then rocked forward, the lever 35 rocks forward around the center axis O1 of the support bolt 32 while rocking the support shaft 24 downwardly so as to take a forward rocked condition where the connecting portion 27 provided on the center axis O2 of the support shaft 24 moves downwardly to thereby push the inner cable portion 12a of the shift cable 12 downwardly. As this occurs, while the connecting portion 44 provided on the lever 35 swivels about the center axis O1 and moves slightly as it does not reside on the center axis O1, the movement remains within a negligible range since a distance to the center axis O1 is short.

Thus, when the lever 35 is rocked leftward from the neutral selection position and is then rocked forward so as to be engaged in a first gear selection position, the inner cable 11b of the selection cable 11 is pushed in the leftward rocked condition, and the inner cable 12b of the shift cable 12 is pushed in the forward rocked condition, whereby the manual transmission selects a first gear.

In addition, in the leftward rocked condition, when the lever 35 is then rocked rearward, the lever 35 rocks rearward around the center axis O1 of the support bolt 32 while rocking the support shaft 24 upwardly so as to take a rearward rocked condition where the connecting portion 27 provided on the center axis O2 of the support shaft 24 moves upwardly to thereby pull the inner cable portion 12b of the shift cable 12 upwardly. Also, as this occurs, while the connecting portion 44 provided on the lever 35 moves slightly, the movement falls within the negligible range.

Thus, when the lever 35 is rocked leftward from the neutral selection position and is then rocked rearward so as to be situated in a second gear selection position, the inner cable 11b of the selection cable 11 is pushed in the leftward rocked condition, and the inner cable portion 12b of the shift cable 12 is pulled in the rearward rocked condition, whereby the manual transmission selects a second gear.

When the lever 35 is rocked forward from the neutral selection position without being rocked transversely, as with the aforesaid forward rocked condition, the connecting portion 27 provided on the center axis O2 of the support shaft 24 moves downwardly to thereby push the inner cable portion 12b of the shift cable 12 downwardly. As this occurs, the connecting portion 44 provided on the lever 35 does not move, and the inner cable portion 11b of the selection cable 11 is neither pushed nor pulled.

Thus, when the lever 35 is rocked forward from the neutral selection position so as to be situated in a third gear selection position, the inner cable portion 11b of the selection cable 11 is neither pushed nor pulled, and only the inner cable portion 12b of the shift cable 12 is pushed in the forward rocked condition, whereby the manual transmission selects a third gear.

In addition, when the lever 35 is rocked rearward from the neutral selection position without being rocked transversely, as with the rearward rocked condition, the connecting portion 27 provided on the center axis O2 of the support shaft 24 moves upwardly to thereby pull the inner cable portion 12b of the shift cable 12 upwardly. As this occurs, the connecting portion provided on the lever 35 does not move, and the inner cable portion 11b of the selection cable 11 is neither pushed nor pulled.

Thus, when the lever 35 is rocked rearward from the neutral selection position so as to be put in a fourth gear selection position, the inner cable portion 11b of the selection cable 11 is neither pushed nor pulled, and in the rearward rocked condition, only the inner cable portion 12b of the shift cable 12 is pulled, whereby the manual transmission selects a fourth gear.

When the lever 35 is rocked rightward from the neutral selection position by holding the control knob 40, the lever 35 rocks rightward around the center axis O2 of the support shaft 24 so as to take a rightward rocked condition where the connecting portion 44 provided on the shift lever 35 in such a manner as to be situated leftward to the center axis O2 moves upwardly to thereby pull the inner cable portion 11b of the selection cable 11 upwardly. Note that, as this occurs, since the connecting portion 27 provided on the center axis O2 of the support shaft 24 does not move, the inner cable portion 12b of the shift cable 12 is neither pushed nor pulled.

When the lever 35 is rocked forward from the rightward rocked condition, as with the forward rocked condition, the connecting portion 27 provided on the center axis O2 of the support shaft 24 moves downwardly to thereby push the inner cable portion 12b of the shift cable 12 downwardly. While the connecting portion 44 provided on the lever 35 moves slightly in this case, too, the movement also falls within a negligible range.

Thus, when the lever 35 is rocked rightward from the neutral selection position and is then rocked forward so as to be put in a fifth gear selection position, the inner cable portion 11b of the selection cable 11 is pulled in the rightward rocked condition, and the inner cable portion 12b of the shift cable 12 is pushed in the forward rocked condition, whereby the manual transmission selects a fifth gear.

In addition, when the lever 35 is rocked rearward from the rightward rocked condition, as with the rearward rocked condition, the connecting portion 27 provided on the center axis O2 of the support shaft 24 moves upwardly to thereby pull the inner cable portion 12b of the shift cable 12 upwardly. While the connecting portion 44 provided on the lever 35 moves slightly in this case, too, the movement also falls within a negligible range.

Thus, when the lever 35 is rocked rightward from the neutral selection position and is then rocked rearward so as to be put in a reverse gear selection position, the inner cable portion 11b of the selection cable 11 is pulled in the rightward rocked condition, and the inner cable portion 12b of the shift cable 12 is pulled in the rearward rocked condition, whereby the manual transmission selects a reverse gear.

According to the gearshift lever apparatus of the embodiment which has been described heretofore, when the lever 35 is rocked transversely about the axis of the support shaft 24, the connecting portion 44 provided on the plane which intersects at right angles with the axis of the support shaft 24 and includes the axis of the support bolt 32 with its position relative to the lever 35 being fixed swivels about the center axis O2 of the support shaft 24, whereby the inner cable portion 11b of the selection cable 11 which is connected to the connecting portion 44 can be pushed and pulled. In addition, when the lever 35 is rocked longitudinally about the axis of the support bolt 32, the connecting portion 27 provided on the axis of the support shaft 24 with its position relative to the support shaft 24 being fixed swivels about the center axis O1 of the support bolt 32, whereby the inner cable portion 12b of the shift cable 12 which is connected to the connecting portion 27 can be pushed and pulled. Thus, the two cables, which are the selection cable 11 and the shift cable 12, can be pulled and pushed without using any link mechanism. Consequently, looseness can be reduced to thereby improve the gearshift lever control feeling, and the number of components can be reduced largely.

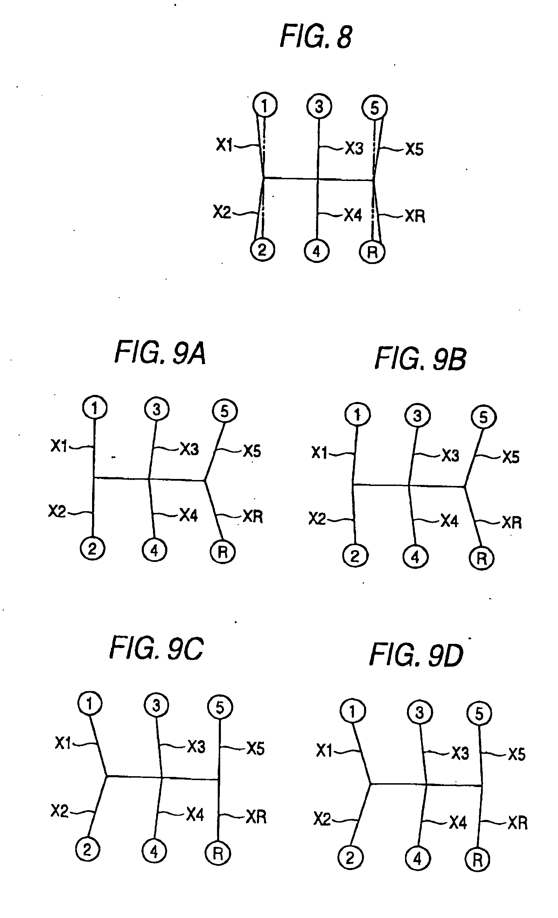

Moreover, as shown in Fig. 8, since the locus of the lever 35 can be modified minimum and regularly relative to an ideal H pattern (indicated by chain double-dashed lines in Fig. 8) having a linear transverse motion locus and longitudinal motion loci which are perpendicular to the transverse motion locus, the gearshift lever control feeling can further be improved. To be specific, a locus resulting when the third gear is selected which is indicated by a solid line X3 and a locus resulting when the fourth gear is selected which is indicated by a solid line X4 can be made an ideal locus. A locus resulting when the first gear is selected which is indicated by a solid line X1 deviates slightly leftward relative to the ideal locus as it extends forward, and a locus resulting when the second gear is selected which is indicated by a solid line X2 also deviates leftward relative to the ideal locus at the same angle as that at which the locus resulting when the first gear is selected deviates as it extends rearward. A locus resulting when the fifth gear is selected which is indicated by a solid line X5 deviates slightly rightward relative to the ideal locus as it extends forward, and a locus resulting when the reverse gear is selected which is indicated by a solid line XR also deviates rightward relative to the ideal locus at the same angle as that at which the locus resulting when the fifth gear is selected deviates as it extends rearward. Thus, there are provided regular modifications.

In addition, the lever loci can be altered as shown in Figs. 9A to 9D by shifting the aforesaid regular modifications by moving the position of the connecting portion 44 when the gearshift lever is in the neutral selection position longitudinally (i.e., vertically) in the rocking direction about the center axis O2 relative to a position where an angle formed by lines connecting the shift cable 12 with the connecting portion 44 and the center axis O2 becomes 90°.

Namely, as shown in Fig. 9A, a locus resulting when the first gear is selected which is indicated by a solid line X1 and a locus resulting when the second gear is selected which is indicated by a solid line X2 are made an ideal locus. A locus resulting when the third gear is selected which is indicated by a solid line X3 can be made to deviate slightly rightward relative to the ideal locus as it extends forward, and a locus resulting when the fourth gear is selected which is indicated by a solid line X4 can also be made to deviate rightward at the same angle as that at which the locus resulting when the third gear is selected deviates as it extends rearward. Furthermore, a locus resulting when the fifth gear is selected which is indicated by a solid line X5 can be made to deviate rightward at an angle which is larger than the angle at which the locus resulting when the third gear is selected relative to the ideal locus as it extends forward, and a locus resulting when the reverse gear is selected which is indicated by a solid line XR can also be made to deviate rightward at the same angle as that at which the locus resulting when the fifth gear is selected relative to the ideal locus as it extends rearward.

In addition, as shown in Fig. 9B, a locus resulting when the first gear is selected which is indicated by a solid line X1 can be made to deviate slightly rightward relative to the ideal locus as it extends forward, and a locus resulting when the second gear is selected which is indicated by a solid line X2 can also be made to deviate rightward at the same angle as that at which the locus resulting when the first gear is selected deviates relative to the ideal locus as it extends rearward. A locus resulting when the third gear is selected which is indicated by a solid line X3 can be made to deviate rightward at an angle which is larger than the angle at which the locus resulting when the first gear is selected deviates relative to the ideal locus as it extends forward, and a locus resulting when the fourth gear is selected which is indicated by a solid line X4 can also be made to deviate rightward at the same angle as that at which the locus resulting when the third gear is selected deviates relative to the ideal locus as it extends rearward. Furthermore, a locus resulting when the fifth gear is selected which is indicated by a solid line X5 can be made to deviate rightward at an angle which is larger than the angle at which the locus resulting when the third gear is selected deviates relative to the ideal locus as it extends forward, and a locus resulting when the reverse gear is selected which is indicated by a solid line XR can also be made to deviate rightward at the same angle as that at which the locus resulting when the fifth gear is selected deviates relative to the ideal locus as it extends rearward.

Additionally, as shown in Fig. 9C, a locus resulting when the fifth gear is selected which is indicated by a solid line X5 and a locus resulting when the reverse gear is selected which is indicated by a solid line XR are made an ideal locus. A locus resulting when the third gear is selected which is indicated by a solid line X3 can be made to deviate slightly leftward relative to the ideal locus as it extends forward, and a locus resulting when the fourth gear is selected which is indicated by a solid line X4 can also be made to deviate leftward at the same angle as that at which the locus resulting when the third gear is selected deviates relative to the ideal locus as it extends rearward. Furthermore, a locus resulting when the first gear is selected which is indicated by a solid line X1 can be made to deviate leftward at an angle which is larger than the angle at which the locus resulting when the third gear is selected deviates relative to the ideal locus as it extends forward, and a locus resulting when the second gear is selected which is indicated by a solid line X2 can also be made to deviate leftward at the same angle as that at which the locus resulting when the first gear is selected deviates relative to the ideal locus as it extends rearward.

Furthermore, as shown in Fig. 9D, a locus resulting when the fifth gear is selected which is indicated by a solid line X5 can be made to deviate slightly leftward relative to the ideal locus as it extends forward, a locus resulting when the reverse gear is selected which is indicated by a solid line XR can also be made to deviate leftward at the same angle as that at which the locus resulting when the fifth gear is selected deviates relative to the ideal locus as it extends rearward. A locus resulting when the third gear is selected which is indicated by a solid line X3 can be made to deviate leftward at an angle which is larger than the angle at which the locus resulting when the fifth gear is selected deviates to the ideal locus as it extends forward, and a locus resulting when the fourth gear is selected which is indicated by a solid line X4 can also be made to deviate leftward at the same angle as that at which the locus resulting when the third gear is selected deviates relative to the ideal locus as it extends rearward. Furthermore, a locus resulting when the first gear is selected which is indicated by a solid line X1 can be made to deviate leftward at an angle which is larger than the angle at which the locus resulting when the third gear is selected deviates relative to the ideal locus as it extends forward, and a locus resulting when the second gear is selected which is indicated by a solid line X2 can also be made to deviate leftward at the same angle as that at which the locus resulting when the first gear is selected deviates relative to the ideal locus as it extends rearward.

When the lever 35 is put in the aforesaid leftward rocked condition and rightward rocked condition from the condition where the lever 35 is in the neutral selection position, the connecting portion 44 disposed on the operational plane which includes the center axes O1, O2 which result when the lever 35 is in the neutral selection position swivels about the center axis O2 at the position leftward to the center axis O2, and as a result, the connecting portion 44 moves substantially perpendicularly relative to the operational plane which includes the center axis O1 and the center axis O2 which result when the lever 35 is in the neutral selection position. In addition, when the lever 35 is put in the forward rocked condition and the rearward rocked condition from the neutral selection position, the connecting portion 27 disposed on the operational plane when the lever 35 is in the neutral selection position swivels about the center axis O1 at the position forward of the center axis O1, and as a result, the connecting portion 27 moves substantially perpendicularly relative to the operational plane. Consequently, the two cables, i.e., the selection cable 11 and the shift cable 12 which extend in the perpendicular direction from the connecting portion 44 and the connecting portion 27 can be pulled and pushed with good efficiency. Thus, rocking distances of the lever 35 required to push and pull the two cables, i.e., the selection cable 11 and the shift cable 12 through the same stroke can be made shorter.

In addition, while the embodiment has been described by reference to the gearshift lever apparatus having the support bolt (the first operating shaft) 32 which extends transversely, the support shaft (the second operating shaft) 24 provided rotatably about the axis of the support bolt 32 while being made perpendicular relative to the axis of the support bolt 32 and the lever 35 provided so as to rotate about the axis of the support shaft 24, for example, the support bolt (the first operating shaft) can be disposed longitudinally, whereas the support shaft (the second operating shaft) can be disposed transversely, and the lever can be rocked transversely around the support bolt and longitudinally around the support shaft which extends perpendicularly from the support bolt.

As has been described heretofore in detail, according to the first aspect of the invention, when the lever and the second operating shaft are rocked about the axis of the first operating shaft, the connecting portion provided on the axis of the second operating shaft with its position being fixed relative to the second operating shaft swivels about the axis of the first operating shaft. Thus, one of the transfer members which is connected to the connecting portion can be pushed and pulled. In addition, when the lever is rocked about the axis of the second operating shaft, the connecting portion provided on the plane which intersects at right angles with the axis of the second operating shaft and includes the axis of the first operating shaft with its position being fixed relative to the lever swivels about the axis of the second operating shaft. Thus, the other transfer member which is connected to the connecting portion can be pushed and pulled. Consequently, the two transfer members can be pushed and pulled without using any link mechanism. Consequently, looseness can be reduced to thereby improve the gearshift lever control feeling, and the number of components can be reduced largely.

According to the second aspect of the invention, when the lever and the second operating shaft are rocked longitudinally about the axis of the first operating shaft, the connecting portion provided on the axis of the second operating shaft with its position being fixed relative to the second operating shaft swivels about the axis of the first operating shaft. Thus, one of the transfer members which is connected to the connecting portion can be pushed and pulled. In addition, when the lever is rocked transversely about the axis of the second operating shaft, the connecting portion provided on the plane which intersects at right angles with the axis of the second operating shaft and includes the axis of the first operating shaft with its position being fixed relative to the lever swivels about the axis of the second operating shaft. Thus, the other transfer member which is connected to the connecting portion can be pushed and pulled.

According to the third aspect of the invention, When the lever and the second operating shaft are rocked about the axis of the first operating shaft from a condition where the lever is in a neutral selection position, the connecting portion provided on the axis of the second operating shaft with its position being fixed relative to the second operating shaft swivels about the axis of the first operating shaft, the connecting portion moves substantially perpendicularly relative to the operational plane which includes the axis of the first operating shaft and the axis of the second operating shaft which result when the lever is in the neutral selection position. In addition, when the lever is rocked about the axis of the second operating shaft from the condition where the lever is in the neutral selection position, the connecting portion provided on the plane which intersects at right angles with the axis of the second operating shaft and includes the axis of the first operating shaft with its position being fixed relative to the lever swivels about the axis of the second operating shaft, and in case the connecting portion is disposed close to the operational plane in the neutral selection position, the connecting portion moves substantially perpendicularly relative to the operational plane. As a result, the two transfer members which extend in the perpendicular direction canbe pushed and pulled with good efficiency. Consequently, the rocking distances of the lever required to push and pull the two transfer members through the same stroke can be made shorter.

## Claims

1. A manual transmission gearshift lever apparatus in which gear changes are controlled by pushing and pulling two transfer members (11, 12), comprising:
a first operating shaft (32);
a second operating shaft (24) provided rotatably about an axis (O1) of the first operating shaft (32) while being made perpendicular to the axis (O1) of the first operating shaft (32) and a lever (35) provided rotatably about an axis (O2) of the second operating shaft (24);
wherein a connecting portion (27) for connecting one of the transfer members (12) onto the axis (O2) of the second operating shaft (24) is disposed with a position so as to be fixed relative to the second operating shaft (24), and
a second connecting portion (44) for connecting the other transfer member (11) is disposed with a position thereof so as to be fixed relative to the lever (35) **characterized in that** the second connecting portion (44) is provided on a plane intersecting at right angles with the axis (O2) of the second operating shaft (24) and includes the axis (O1) of the first operating shaft (32).

2. A manual transmission gearshift lever apparatus as claimed in claim 1, wherein the first operating shaft (32) extends transversely, and the second operating shaft (24) extends forward from the first operating shaft (32) , whereby the lever (35) is allowed to rock longitudinally about the axis (O1) of the first operating shaft (32) and transversely about the axis (O2) of the second operating shaft (24).

3. A manual transmission gearshift lever apparatus as claimed in claim 1 or 2, wherein the two transfer members (11,12) are made to extend in perpendicular direction relative to an operational plane including the axis (O1) of the first operating shaft (32) and the axis (O2) of the second operating shaft (24) which result when the lever (35) is situated in a predetermined neutral selection position constituting an intermediate position of a rocking range around the axis (O1) of the first operating shaft (32) and an intermediate position of a rocking range around the axis (O2) of the second operating shaft (24).

## Patentansprüche

1. Schalthebelvorrichtung für manuelle Schaltgetriebe, wobei ein Gangwechsel durch Schieben oder Ziehen von zwei Übertragungselementen (11, 12) geregelt/gesteuert ist, umfassend:
eine erste Betätigungswelle (32);
eine zweite Betätigungswelle (24), welche drehbar um eine Achse (O1) der ersten Betätigungswelle (32) bereitgestellt ist, wobei sie zur Achse (O1) der ersten Betätigungswelle (32) senkrecht ausgebildet ist, und
einen Hebel (35), welcher drehbar um eine Achse (O2) der zweiten Betätigungswelle (24) bereitgestellt ist;
wobei ein Verbindungsabschnitt (27) zum Verbinden eines der Übertragungselemente (12) mit der Achse (O2) der zweiten Betätigungswelle (24) in einer Position derart angeordnet ist, dass er relativ zur zweiten Betätigungswelle (24) fixiert ist, und
wobei ein zweiter Verbindungsabschnitt (44) zum Verbinden des anderen Übertragungselementes (11) in einer Position davon derart angeordnet ist,
dass er relativ zum Hebel (35) fixiert ist,
**dadurch gekennzeichnet,**
**dass** der zweite Verbindungsabschnitt (44) auf einer Ebene bereitgestellt ist, welche die Achse (O2) der zweiten Betätigungswelle (24) senkrecht schneidet und die Achse (O1) der ersten Betätigungswelle (32) umfasst.

2. Schalthebelvorrichtung für manuelle Schaltgetriebe nach Anspruch 1, wobei die erste Betätigungswelle (32) sich quer erstreckt und die zweite Betätigungswelle (24) sich von der ersten Betätigungswelle (32) vorwärts erstreckt,
wobei der Hebel (35) um die Achse (O1) der ersten Betätigungswelle (32) in Längsrichtung und um die Achse (O2) der zweiten Betätigungswelle (24) in Querrichtung schwenkbar ist.

3. Schalthebelvorrichtung für manuelle Schaltgetriebe nach Anspruch 1 oder 2,
wobei die zwei Übertragungselemente (11, 12) dazu ausgebildet sind, um sich in senkrechter Richtung relativ zu einer Betätigungsebene zu erstrecken, welche die Achse (O1) der ersten Betätigungswelle (32) und die Achse (O2) der zweiten Betätigungswelle (24) umfasst, welche erreicht wird, wenn der Hebel (35) in einer vorbestimmten Neutralauswahlstellung angeordnet ist, welche eine Zwischenstellung eines Schwenkbereichs um die Achse (O1) der ersten Betätigungswelle (32) und eine Zwischenstellung eines Schwenkbereichs um die Achse (O2) der zweiten Betätigungswelle (24) bildet.

## Revendications

1. Dispositif de levier de vitesses pour boîte de vitesses manuelle, dans lequel des changements de vitesse sont commandés en poussant et en tirant deux éléments de transfert (11, 12), comportant :
un premier arbre de commande (32) ;
un second arbre de commande (24) agencé de manière à pouvoir tourner autour d'un axe (O1) du premier arbre de commande (32) tout en étant amené perpendiculaire à l'axe (O1) du premier arbre de commande (32) et un levier (35) agencé de manière à pouvoir tourner autour d'un axe (O2) du second arbre de commande (24) ;
dans lequel une partie de liaison (27) pour relier l'un des éléments de transfert (12) sur l'axe (O2) du second arbre de commande (24) est disposée avec une position de manière à être fixe par rapport au second arbre de commande (24), et
une seconde partie de liaison (44) pour relier l'autre élément de transfert (11) est disposée avec une position de celle-ci de manière à être fixe par rapport au levier (35) **caractérisé en ce que** la seconde partie de liaison (44) est agencée sur un plan en intersection à angles droits avec l'axe (O2) du second arbre de commande (24) et inclut l'axe (O1) du premier arbre de commande (32).

2. Dispositif de levier de vitesses pour boîte de vitesses manuelle tel que revendiqué dans la revendication 1, dans lequel le premier arbre de commande (32) s'étend transversalement, et le second arbre de commande (24) s'étend vers l'avant à partir du premier arbre de commande (32), en permettant ainsi au levier (35) d'osciller longitudinalement autour de l'axe (O1) du premier arbre de commande (32) et transversalement autour de l'axe (O2) du second arbre de commande (24).

3. Dispositif de levier de vitesses pour boîte de vitesses manuelle tel que revendiqué dans la revendication 1 ou 2, dans lequel les deux éléments de transfert (11, 12) sont amenés à s'étendre dans une direction perpendiculaire par rapport à un plan de fonctionnement incluant l'axe (O1) du premier arbre de commande (32) et l'axe (O2) du second arbre de commande (24) qui résultent lorsque le levier (35) est situé dans une position de sélection neutre prédéterminée constituant une position intermédiaire d'une plage d'oscillation autour de l'axe (O1) du premier arbre de commande (32) et une position intermédiaire d'une plage d'oscillation autour de l'axe (O2) du second arbre de commande (24).
